# EUROPÄISCHE PATENTSCHRIFT

(11) **EP 2 554 274 B1**
(45) Veröffentlichungstag und Bekanntmachung des Hinweises auf die Patenterteilung: **17.06.2015**
(21) Anmeldenummer: 11006382.3
(22) Anmeldetag: 03.08.2011
(51) Int. Cl.: B05B 12/14, B05B 12/08, G01M 3/28

(54) **Lackmaterialschaltstrecke und Farbwechsler**
Paint supply shift line and colour changer
Voie de couplage d'alimentation de peinture et changeur de teinte

(43) Veröffentlichungstag der Anmeldung: 06.02.2013
(73) Patentinhaber: ABB Technology AG, 8050 Zürich (CH)
(72) Erfinder: Börner, Gunter, Dr., 74889 Sinsheim (DE)
(74) Vertreter: Kock, Ina

(56) Entgegenhaltungen:
- WO-A2-2006/122281
- DE-A1- 4 339 302
- DE-A1-102005 033 191

## Beschreibung

Die Erfindung betrifft eine Lackmaterialschaltstrecke, umfassend ein erstes und ein zweites Ventilmittel mit jeweils einem Einlass und einem Auslass, ein zwischen Auslass des ersten und Einlass des zweiten Ventilmittels angeordnetes hohlzylindrisches Zwischenstück, wobei der Einlass des ersten Ventilmittels dafür vorgesehen ist, an eine ständig unter Druck stehende Lackmaterialversorgung angeschlossen zu sein sowie einen wahlweise unter Druck setzbaren Sammelkanal, in welchen der Auslass des zweiten Ventilmittels mündet. Die Erfindung betrifft auch einen Farbwechsler mit derartigen Lackmaterialschaltstrecken und ein entsprechendes Verfahren zur Leckageermittlung.

Es ist allgemein bekannt, dass in industriellen Lackieranlagen, beispielsweise im Bereich der Automobilindustrie, Lackmaterialien mit einer Vielzahl an verschiedenen Farbtönen für die Beschichtung von Werkstücken wie Automobilkarosserien verwendet werden. Je nach Marktsegment des jeweiligen Herstellers können dies beispielsweise zehn verschiedene Farbtöne aber auch fünfzig und mehr sein. Die Lackierung von Werkstücken erfolgt zumeist mittels Lackierrobotern, welche in einer klimatisierten Lackierkabine angeordnet sind. Die Werkstücke werden typischerweise über eine Fördereinrichtung in die Lackierkabine eingefahren, wo sie dann von den Lackierrobotern beschichtet werden. Die Abfolge der in einem jeweiligen Farbton zu beschichtenden Werkstücke auf der Fördereinrichtung ist zumeist durch den Gesamtproduktionsablauf vorgegeben. Daher ist ein häufiger Farbwechsel an den jeweiligen Lackierrobotern notwendig. Die Zahl der erforderlichen Farbwechsel kann bei einer typischen Taktzeit von 60s - 80s pro Werkstück beziehungsweise Werkstückträger einige hundert pro Tag und Roboter betragen.

Bei einem Farbwechsler gemäß dem Stand der Technik mündet eine Vielzahl an Lackmaterialversorgungsschläuchen über entsprechende Ventile in einen gemeinsamen Sammelkanal. Dieser ist an seinem Ende verschlossen und an seinem anderen Ende mittels einer Schlauchverbindung strömungstechnisch mit einem Zerstäuber verbunden. Bei einem Farbwechsel ist zunächst das in gemeinsamen Sammelkanal, Schlauchverbindung und Zerstäuber befindliche Lackmaterial als Verwurf auszudrücken, bevor diese Strecke dann gespült und danach neues Lackmaterial angedrückt werden kann.

Bei einem Farbwechsel ist in jedem Fall dafür zu sorgen, dass es zu keiner Farbverschleppung kommt. Dies ist ein - wenn auch infinitesimal geringer - Eintrag eines ersten Lackmaterials in ein zweites Lackmaterial. Eine Farbverschleppung kann je nach miteinander ungewollt vermischten Farbtönen zu einer erheblichen Beeinträchtigung des Lackierergebnisses kommen, beispielsweise wenn bereits eine geringfügige Menge eines roten Farbtones in einen weißen Farbton gelangt, welcher dann bereichsweise als rosa erscheint. Zur Vermeidung derartiger Farbverschleppungen ist es unerlässlich, den Sammelkanal bei einem Farbwechsel entsprechend gründlich zu reinigen.

Trotz entsprechender Reinigungsmaßnahmen kann es aber dennoch zu Farbverschleppungen kommen, nämlich wenn eines der Schaltventile eine Leckage aufweist, also trotz eigentlich geschlossenem Schaltzustand eine wenn auch nur geringfügige Lackmaterialmenge von der jeweiligen Versorgungsleitung in den Sammelkanal gelangt.

*So ist im Patentdokument* DE 102005033191 A1 *ein Farbauswahlventil offenbart, welches eine Flüssigkeitsansammlung oder eine Flüssigkeitsleckage mittels eines Drucksensors zu erkennen beziehungsweise zu vermeiden sucht. Die Patentschrift* DE 4339302 A1 *betrifft einen Farbwechselblock zum wahlweisen Einspeisen von unterschiedlichen Farben. Es sind Steuerventile vorgesehen, welche mit einem Entlüftungsweg verbunden sind, welcher durch eine optische Auswertung eines durch diesen fließenden gegebenenfalls getrübten Abluftstromes der Leckageerfassung dient. In der internationalen Patentanmeldung* WO 2006/122281 A2 *ist ein System zu Versorgung mit Farbpulver offenbart, welches dafür vorgesehen ist, Verstopfungen mittels einer Druckluftquelle zu beseitigen.*

Eine bekannte Maßnahme zur weiteren Reduktion des Risikos einer Farbverschleppung aufgrund einer Leckage eines Ventils besteht darin, zwei Ventile beziehungsweise Ventilmittel strömungstechnisch in Reihe zu einer Doppelanordnung schalten und synchron zu schalten. Hier ist eine Leckage der Gesamtanordnung nur bei einem Defekt beider in Reihe geschalteter Ventilmittel möglich.

Dennoch führt eine Reihenschaltung von Ventilmitteln zu einer Lackmaterialschaltstrecke nur bedingt zu einer Erhöhung der Sicherheit, weil beide Ventile den selben Schaltzyklen unterworfen sind und daher ein synchroner Verschleiß und Ausfall beider Ventile wahrscheinlich ist.

Nachteilig ist insbesondere, dass auch bei derartigen Lackmaterialschaltstrecken eine Leckage des beziehungsweise der Ventilmittel nicht oder nur an bereits fehlerhaft beschichteten Werkstücken erkennbar ist, welche dann Ausschuss sind.

Ausgehend von diesem Stand der Technik ist es Aufgabe der Erfindung, eine Lackmaterialschaltstrecke beziehungsweise einen Farbwechster mit einer Möglichkeit einer frühzeitigen und sicheren Leckageerkennung sowie ein entsprechendes Benutzungsverfahren bereitzustellen.

Diese Aufgabe wird gelöst durch eine Lackmaterialschaltstrecke der eingangs genannten Art. Diese ist gekennzeichnet durch Mittel zur Erfassung des im hohlzylindrischen Zwischenstück herrschenden Drucks sowie eine Auswertevorrichtung zur Leckageermittlung wenigstens eines der beiden Ventilmittel anhand des zeitlichen Verlaufes des erfassten Drucks bei einer zu Beginn der Leckageermittlung gegebenen Druckdifferenz zwischen Ein- und Auslass des jeweiligen Ventilmittels.

Die Grundidee der Erfindung besteht darin, eine bekannte Reihenschaltung von Ventilmitteln dahingehend zu verbessern, dass eine Leckageerkennung anhand einer Drift des gemessenen Druckverlaufes in dem als Verbindung dienenden hohlzylindrischen Zwischenstück erfolgt, welches während der Leckageerkennung beidseitig durch die Ventile zu verschließen ist. Hierzu ist zunächst eine Druckdifferenz zwischen dem Ein- und dem Auslass des zu prüfenden Ventils aufzubauen. Dies kann auf mehrere Möglichkeiten erfolgen.

Einerseits kann zunächst das zweite, in den Sammelkanal mündende Ventil geschlossen werden, so dass der gesamte Druck der Lackmaterialversorgung, beispielsweise 8 Bar, auch im hohlzylindrischen Zwischenstück herrscht. Der Sammelkanal ist in diesem Fall drucklos zu schalten, so dass zwischen Ein- und Auslass des zweiten Ventils eine Druckdifferenz von ca. 8 Bar herrscht. Nachfolgend ist auch das erste Ventil zu schließen, so dass das rohrähnliche Zwischenstück beidseitig hermetisch abgeschlossen ist. Im Falle einer Leckage des zweiten Ventils erfolgt aufgrund der Druckdifferenz ein Ausfluss an Lackmaterial durch das defekte Ventil in den Sammelkanal, so dass ein Druckabfall beziehungsweise eine Druckdrift in dem rohrähnlichen Zwischenstück einsetzt. Ein Ersatz des abfließenden Materials durch die Lackmaterialversorgung ist nämlich durch das geschlossene erste Ventil unterbunden. Somit kann durch Messung des Druckverlaufs beziehungsweise eines Druckabfalls im rohrähnlichen Zwischenstück auf vorteilhafte Weise auf eine Leckage des zweiten Ventils geschlossen werden.

Es ist aber auch möglich, eine Leckage des ersten Ventils zu ermitteln, indem das rohrähnliche Zwischenstück drucklos geschaltet und danach beidseitig mittels der Ventile abgeschottet wird. Dies geschieht dadurch, dass zunächst das erste Ventil geschlossen wird, während das zweite Ventil noch offen ist und der Sammelkanal ebenfalls drucklos geschaltet ist. So kann sich ein eventuell im rohrähnlichen Zwischenraum herrschender Druck in den Sammelkanal entspannen. Danach ist auch das zweite Ventil zu schließen, so dass bei korrekt geschlossenen Ventilen das rohrähnliche Zwischenstück drucklos bleibt. Im Falle einer Leckage des ersten Ventils dringt Lackmaterial aus der unter Druck stehenden Versorgungsleitung in das Zwischenstück. Dies führt dort zu einer driftenden Druckerhöhung, da der aufgebaute Druck wegen des zweiten geschlossenen Ventils nicht in den Sammelkanal abgeführt werden kann. Somit kann unter diesen Randbedingungen durch Messung des Druckverlaufs beziehungsweise eines Druckanstiegs im rohrähnlichen Zwischenstück auf vorteilhafte Weise auf eine Leckage des ersten Ventils geschlossen werden.

Entsprechend ist es auch möglich, bei beidseitig von außen auf den Zwischenraum einwirkendem Druck auf den Defekt eines der beiden Ventile zu schließen, ohne allerdings eine genaue Aussage zu erhalten, welches Ventil eine Leckage aufweist. Hierzu ist wieder zunächst das erste Ventil zu schließen und das zweite bei drucklosem Sammelkanal zu öffnen. Danach ist das zweite Ventil zu schließen. Nun kann der Sammelkanal ebenfalls wieder unter Druck gesetzt werden, beispielsweise wenn dieser im Lackierbetrieb von einem weiteren Lackmaterial aus einer weiteren Lackmittelschaltstrecke durchströmt wird. Ein Druckanstieg im rohrähnlichen Zwischenstück ist dann ein Kriterium für den Defekt wenigstens eines der beiden an diesen angrenzenden Ventilen.

Der vermeintliche Nachteil, nämlich dass keine Information darüber vorhanden ist, welches der beiden Ventile defekt ist, wird aber andererseits dadurch aufgewogen, dass eine derartige Leckageerkennung während des Lackierbetriebes erfolgen kann, also während des Lackflusses eines weiteren Lackmaterials über eine weitere Lackschaltstrecke durch den Sammelraum und von dort beispielsweise zu einem Zerstäuber. Hierbei ist der Sammelkanal dann zwangsläufig ebenfalls unter Druck gesetzt. Hier steht in vorteilhafter Weise die gesamte Zeit des Lackierzyklus, beispielsweise 60s - 80s, zur Erkennung einer Drift im gemessenen Druck zur Verfügung, ohne dass der serielle Lackierbetrieb unterbrochen werden müsste.

Das rohrähnliche Zwischenstück ist vorteilhafter Weise mit einer gewissen Elastizität ausgestaltet um einen Druckanstieg etwas zeitlich zu entzerren und damit besser detektierbar zu machen, beispielsweise als Schlauchstück. Selbstverständlich ist aber auch ein Rohrstück aus einem Metall, beispielsweise Edelstahl, möglich.

Als Mittel zur Erfassung des Druckes im rohrähnlichen Zwischenstück dient beispielsweise ein handelsüblicher Drucksensor. Dieser erzeugt kontinuierlich Messsignale, welche dann der Auswertevorrichtung, beispielsweise einer Rechenvorrichtung beziehungsweise auch einem Steuerrechner, zugeführt werden. Die Auswertevorrichtung benötigt zudem noch die Information über den Schaltzustand der beiden Ventile, denn eine Druckmessung für eine Leckageermittlung ist lediglich dann durchzuführen, wenn beide Ventile geschlossen sind. Diese Informationen sind der Auswertevorrichtung beispielsweise über entsprechende Signalleitungen zur Verfügung zu stellen. Die Signalleitungen können direkt mit den Ventilen verbunden sein, es ist aber auch eine Ankopplung an ein zentrales Steuersystem möglich, welches beispielsweise die Farbversorgung einer ganzen Produktionslinie oder zumindest einer Lackierkabine steuert. Im Falle einer detektierten Leckage ist vorzugsweise eine Warnmeldung oder Fehlermeldung zu erzeugen und auszugeben, so dass das vom Wartungspersonal das jeweils defekte Ventil ausgetauscht werden kann.

Zur Herstellung der jeweiligen gewünschten Ausgangsdruckverhältnisse reicht es beispielsweise, wenn zwischen dem Schalten der beiden das rohrähnliche Zwischenstück verschließenden Ventile eine Zeit von 1s bis 2s liegt, so dass in dieser Zeitspanne entweder jeweils ein Druckaufbau beziehungsweise ein Druckabbau erfolgen kann. Die Zeit der Messung für eine Druckdrift ist typischerweise möglichst lang zu halten um eine möglichst hohe Genauigkeit durch eine entsprechend hohe akkumulierte Druckdrift zu erzielen, wobei beispielsweise 60s durchaus ausreichend sind.

Entsprechend einer weiteren vorteilhaften Ausgestaltung der Erfindung sind beide Ventilmittel dafür vorgesehen, während der Leckageermittlung geschlossen zu sein. Somit ist das rohrähnliche Zwischenstück beidseitig hermetisch verschlossen, so dass bei korrekt funktionierenden Ventilen dann ein konstanter Druck darin herrscht, was dann als Kriterium für jeweils korrekt arbeitende Ventile verwendbar ist.

Gemäß einer bevorzugten Ausführungsform der Erfindung sind die Ventilmittel durch die Auswertevorrichtung schaltbar. Dies ermöglicht eine einfache Durchführung beziehungsweise Steuerung einer Leckageermittlung durch die Auswertevorrichtung selbst, welche die Ventile dann in einer Sequenz ansteuert, welche für eine jeweilige Leckageermittlung benötigt wird. In besonders bevorzugter Weise ist die Auswertevorrichtung in einen ohnehin für die Steuerung der Farbversorgung beziehungsweise auch weiterer Anlagenkomponenten ohnehin vorhandenen Steuerrechner integriert. Der Steuerrechner kann aber auch beispielsweise ein Robotercontroller sein, welcher dann neben der eigentlichen Bewegungssequenz des zugeordneten Roboters auch dessen Farbversorgung kontrolliert. Die benötigten Steuerleitungen sind typischerweise ohnehin vorhanden, so dass als zusätzlicher Aufwand lediglich ein Drucksensor, eine zugehörige Kommunikationsleitung sowie programmtechnische Anpassung der Steuerungssoftware nötig sind.

Einer weiteren Erfindungsvariante folgend sind weitere Ventilmittel vorhanden, durch welche der Sammelkanal wahlweise unter Druck setzbar ist und welche durch die Auswertevorrichtung schaltbar sind. Die erfindungsgemäße Lackmaterialschaltstrecke ist typischerweise als einer von mehreren Versorgungszweigen eines Farbwechslers anzusehen. Hierbei ist ein gemeinsamer Sammelkanal vorgesehen, in welchen mehrere Lackmaterialschaltstrecken münden. Für den Fall eines Farbwechsels sind demgemäß typischerweise auch eine Luft- und/oder Lösemittelleitung vorgesehen, welche schaltbar über jeweilige weitere Ventile in den Sammelkanal münden. Ebenso ist der Ausgang des Sammelkanals, welcher zu einem Zerstäuber oder einer anderen Farbabnahmestelle geführt ist, üblicherweise ebenfalls mittels eines Ventils verschließbar, welches ggf. auch direkt im Zerstäuber als Hauptnadelventil angeordnet sein kann. Eine Druckentspannung im Sammelkanal kann, sofern kein Zufluss eines Lackmaterials oder Lösemittels in diesen erfolgt, durch Öffnen des Ventils für den Ausgang des Sammelkanals erfolgen. Zum Aufbau eines Drucks im Sammelkanal ist vorzugsweise eine der erfindungsgemäßen Lackmaterialschaltstrecken geöffnet, wobei dann sowohl bei geöffnetem als auch bei geschlossenem Ausgangsventil ein Druck im Sammelkanal vorherrscht.

Demgemäß ist erfindungsgemäß zur Lösung der gestellten Aufgabe auch ein Farbwechsler vorgesehen, welcher mehrere Lackmaterialschaltstrecken nach einem der Ansprüche 1 bis 4 umfasst und welche in einen gemeinsamen Sammelkanal münden. Ein solcher Farbwechsler zeichnet sich durch eine besonders hohe Zuverlässigkeit aus, das Ventildefekte bereits detektierbar sind, bevor beschichtete Werkstücke aufgrund einer Farbverschleppung wegen defekter Ventilmittel als Ausschuss zu entfernen sind.

In besonders bevorzugter Weise ist eine gemeinsame Auswertevorrichtung zur Leckageermittlung der Lackschaltstrecken des Farbwechslers vorgesehen. Der Steuerungsaufwand wird hierdurch in vorteilhafter Weise verringert. Als weiterhin vorteilhaft erweist es sich, wenn auch die erfindungsgemäßen Farbwechsler komplett in die Anlagensteuerung eingebunden werden, so dass diese beispielsweise von einem gemeinsamen ohnehin vorhandenen Steuerrechner für beispielsweise eine Lackierkabine überwacht werden. Aber auch hier besteht eine vorteilhafte weitere Variante darin, den erfindungsgemäßen Farbwechsler mittels eines ohnehin vorhandenen Robotercontrollers anzusteuern und zu überwachen.

Weitere vorteilhafte Ausgestaltungsformen für die Integration eines erfindungsgemäßen Farbwechslers in ein Farbversorgungssystem bestehen darin, dass der gemeinsame Sammelkanal beispielsweise mittels geeigneter Anschlussvorrichtungen dafür vorgesehen ist, mit einem Zerstäuber für Lackmaterial verbunden zu werden. Ebenso sind für den Fall eines Farbwechsels Mittel vorzusehen, diesen mit einem Lösemittel zu beziehungsweise einem Luft- Lösemittelgemisch zu spülen. Dies sind insbesondere entsprechende Versorgungsleitungen, welche über jeweilige Ventilmittel in den gemeinsamen Sammelkanal münden.

Die erfindungsgemäße Aufgabe wird auch gelöst durch ein Verfahren zur Leckageermittlung eines Ventilmittels einer Lackmaterialschaltstrecke nach einem der Ansprüche 1 bis 4, dadurch gekennzeichnet, durch folgende Schritte:
- bedarfsweises Schließen des zu prüfenden ersten Ventilmittels,
- Herstellung einer Druckdifferenz zwischen Ein- und Auslass des zu prüfenden ersten geschlossenen Ventilmittels bei geöffnetem zweitem Ventilmittel,
- Schließen des zweiten Ventilmittels,
- Ermittlung des zeitlichen Druckverlaufs in der abgeriegelten Schlauchstrecke,
- bei driftendem Druckverlauf Detektion des zu prüfenden ersten Ventilmittels als fehlerhaft.

Wie bereits zuvor beschrieben, besteht die Grundvorgehensweise hierbei in der Schaffung gegebener Druckverhältnisse in dem rohrähnlichen Zwischenstück, welches danach beidseitig durch die Ventilmittel verschlossen wird, so dass sich - unabhängig von abweichenden äußeren Druckverhältnissen, bei korrekt schließenden Ventilmitteln ein konstanter Innendruck hält. Ein Druckanstieg beziehungsweise Druckverlust ist somit ein Indikator für eine Leckage eines der Ventile.

Durch analoge Anwendung des oben genannten Verfahrens zur Leckageermittlung auf das zweite Ventilmittel ist eine Leckage des zweiten Ventilmittels feststellbar. Beide Verfahrensvarianten sind auch miteinander kombinierbar, wobei dann das rohrähnliche Zwischenstück zunächst in den drucklosen Zustand zu versetzen und danach beidseitig zu verschließen ist. Für den Fall, dass beidseitig von außen dann ein jeweiliger Druck herrscht, beispielsweise wenn durch einen gemeinsamen Sammelkanal eines erfindungsgemäßen Farbwechsler gerade ein weiteres Lackmaterial strömt, ist allerdings im Falle einer detektierten Leckage nicht eindeutig feststellbar, welches der beiden angrenzenden Ventilmittel defekt ist. In diesem Falle ist jedoch in vorteilhafter Weise eine Leckageermittlung bei laufendem Lackierbetrieb ermöglicht. Weitere vorteilhafte Ausgestaltungsmöglichkeiten sind den weiteren abhängigen Ansprüchen zu entnehmen.

Anhand der in den Zeichnungen dargestellten Ausführungsbeispiele sollen die Erfindung, weitere Ausführungsformen und weitere Vorteile näher beschrieben werden.

Es zeigen:
- Fig. 1: eine exemplarische erste Lackmaterialschaltstrecke mit Farbversorgungssystem,
- Fig. 2: einen schematischen Ablaufplan sowie
- Fig. 3: eine exemplarische zweite Lackmaterialschaltstrecke.

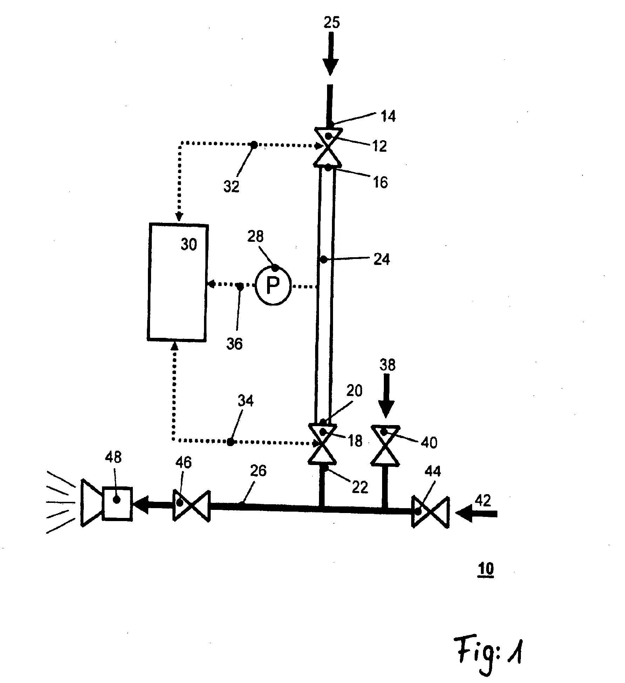

Fig. 1 zeigt eine exemplarische erste Lackmaterialschaltstrecke mit Farbversorgungssystem in einer schematischen Zeichnung 10. Ein erstes Ventilmittel 12 ist mit seinem Einlass 14 mit einer unter Druck stehenden Lackmaterialversorgung 25 verbunden. Dies ist ein zu einer nicht gezeigten Ringleitung geführter Hochdruckschlauch, in welchem ein unter einem Druck von beispielsweise 6 Bar stehendes Lackmaterial eines blauen Farbtons befindlich ist. Mit seinem Auslass 16 ist das erste Ventilmittel 12 hermetisch mit einem Ende eines hohlzylindrischen Zwischenstücks 24 verbunden, welches mit seinem anderen Ende hermetisch mit dem Einlass 20 eines zweiten Ventilmittels 18 verbunden ist. Dessen Auslass 22 ist hermetisch mit einem unter Druck setzbaren Sammelkanal 26 verbunden. Somit ist im Wesentlichen aus den beiden Ventilmitteln 12, 18 und dem dazwischen angeordneten rohrähnlichen Zwischenstück 24, was beispielsweise als Schlauchstück ausgeführt sein kann, eine Lackmaterialschaltstrecke gebildet.

In den Sammelkanal 26 münden fernerhin eine Pulsluftversorgungsleitung 38 und eine Lösemittelversorgungsleitung 42, welche über jeweilige weitere Ventilmittel 40, 42 schaltbar sind. Diese dienen insbesondere der Reinigung des Sammelkanals 26 im Falle eines Farbwechsels und münden daher am Ende des Sammelkanals in diesen. Weiterhin anzunehmen, aber in dieser Darstellung nicht gezeigt, sind weitere baugleiche Lackmaterialschaltstrecken, welche ebenfalls in dem Sammelkanal 26 münden und für Lackmaterialien anderer Farbtöne vorgesehen sind. Der Ausgang des Sammelkanals 26 ist strömungstechnisch mit einem Zerstäuber 48 für Lackmaterial verbunden, mit welchem das gegebenenfalls über eine geöffnete Lackmaterialschaltstrecke einströmende Lackmaterial und am Ausgang des Sammelkanals 26 wieder ausströmende Lackmaterial zerstäubt wird. Die Verbindung zwischen Zerstäuber 48 und Sammelkanal 26 ist über ein weiteres Ventilmittel 46 schaltbar.

Je nach Schaltzustand der jeweiligen Ventilmittel ist der Sammelkanal 26 jeweils unter Druck setzbar. Dieser ist dann unter Druck, wenn eine der Lackmaterialstrecken geöffnet ist und der ringleitungsseitige Druck dann auch auf den Sammelkanal 26 übertragen wird. Die weiteren Ventilmittel 40, 44 für den Spülvorgang sind außer für den Spülvorgang geschlossen. Auch bei geöffnetem dritten Ventilmittel 46, wenn also Lackmaterial aus dem Sammelkanal 26 zum Zerstäuber 48 strömt, herrscht ein erhöhter Druck im Sammelkanal 26. Eine vollständige Druckentlastung des Sammelkanals 26 ist somit im Wesentlichen dann zu erreichen, wenn keine der in den Sammelkanal mündenden Schaltstrecken komplett geöffnet ist und das dritte Ventilmittel 46 geöffnet ist.

Eine Auswertevorrichtung 30 ist über entsprechende Steuerleitungen 32, 34 mit dem ersten 12 und zweiten 18 Ventilmittel verbunden. Dies beinhaltet sowohl eine Ansteuerung der Ventilmittel 12, 18 durch die Auswertevorrichtung 30 als auch eine Rückmeldung der Ventilmittel 12, 18 über ihren jeweiligen Schaltzustand. Fernerhin sind Mittel zur Erfassung des als Schlauchstück ausgeführten hohlzylindrischen Zwischenstücks 24, einen handelsüblichen Drucksensor. Dieser ist dafür vorgesehen, kontinuierlich Messwerte bezüglich des im Schlauchstück herrschenden Drucks über eine Kommunikationsleitung 36 an die Auswertevorrichtung 30 zu übermitteln. Die Auswertevorrichtung 30 ist auch dafür vorgesehen, die weiteren Ventilmittel 40, 44, 46 anzusteuern. Vorzugsweise ist die Auswertevorrichtung 30 Teil eines ohnehin vorhandenen Robotercontrollers, welcher somit nicht nur die Bewegungen des zugehörigen Roboters sondern auch dessen Farbversorgung steuert.

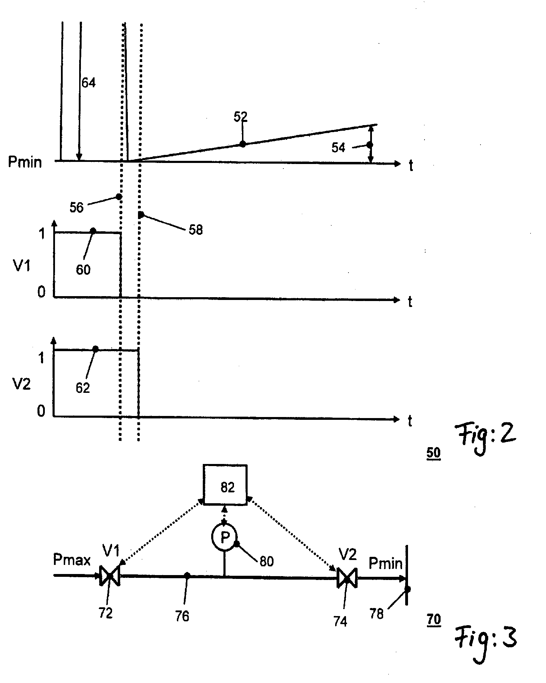

Fig. 2 zeigt einen schematischen Ablaufplan 50 für den Ablauf einer Leckageermittlung eines Ventilmittels einer Lackmaterialschaltstrecke, wie sie auch in der Figur 3 gezeigt ist.

Im oberen Diagramm ist ein exemplarischer Druckverlauf 52 über der Zeit in dem rohrähnlichen Zwischenstück gezeigt. Das mittlere Diagramm zeigt den zeitlichen Verlauf 60 des Schaltzustandes eines zugehörigen ersten, an eine Lackversorgungsleitung angeschlossenen Ventilmittels und das unteren Diagramm den zeitlichen Verlauf 62 des Schaltzustandes eines zugehörigen zweiten, in einen als geöffnet angenommenen Sammelkanal mündenden Ventilmittels.

Zu Beginn des zeitlichen Verlaufs sind erstes V1 und zweites V2 Ventilmittel geöffnet, so dass sich im rohrähnlichen Zwischenstück ein Druck Pmax einstellt, welcher auch in der zugehörigen Farbversorgungsleitung herrscht. Zu einem späteren Zeitpunkt - mit der linken senkrechten gestrichelten Linie 56 angedeutet - wird das versorgungsleitungsseitige Ventilmittel V1 geschlossen. Da nun kein neues Lackmaterial nach fließen kann, entspannt sich der Druck im hohlzylindrischen Zwischenstück über das immer noch geöffnete sammelkanalseitige Ventilmittel V2 auf den geringeren Umgebungsdruck Pmin. Somit herrscht zwischen Ein- und Auslass des ersten Ventilmittels V1 eine Druckdifferenz Pmax - Pmin, wie mit dem Pfeil 64 angedeutet. Nachfolgend, zum mit der gestrichelten Linie 58 angedeuteten Zeitpunkt, wird nun auch das sammelkanalseitige Ventilmittel V2 geschlossen, so dass das rohrähnliche Zwischenstück beidseitig hermetisch abgeschlossen ist.

Im weiteren Verlauf dringt nun, aufgrund einer Leckage des Ventilmittels V2 und der über diesem anliegenden Druckdifferenz Pmax - Pmin Lackmaterial durch das leckende Ventil V2 in das rohrähnliche Zwischenstück. Dies führt im Weiteren zeitlichen Verlauf zu einem Anstieg von dessen Innendruck, was sich durch das Auftreten einer Drift 54 bemerkbar macht. Dies ist dann das Kriterium, anhand dessen erfindungsgemäß auf eine Leckage des ersten Ventilmittels V1 geschlossen werden kann.

Fig. 3 zeigt eine exemplarische Lackmaterialschaltstrecke, anhand derer zuvor die Diagramme aus der Fig. 2 beschrieben wurden. Ein erstes Ventilmittel 72 ist an einer unter einem Druck Pmax stehenden Lackmaterialversorgungsleitung angeschlossen. Zwischen erstem 72 und einem zweiten 74 Ventilmittel ist ein hohlzylindrisches Zwischenstück 76 angeordnet. Die Auslassseite des zweiten Ventilmittels 74 ist mit einem Sammelkanal 78 verbunden, welcher gerade drucklos auf einen Außendruck Pmin geschaltet ist. Eine Auswertevorrichtung 82 ist dafür vorgesehen, mit den beiden Ventilmitteln 72, 74 zu kommunizieren, indem sowohl deren Schaltzustände vorgegeben als auch abgefragt werden können. Ein Drucksensor 80 ist zur Erfassung des als Schlauchstück ausgeführten hohlzylindrischen Zwischenstücks 76 vorgesehen und über eine Datenleitung mit der Auswerteeinrichtung 82 verbunden.

### Bezugszeichenliste

- 10: exemplarische Lackmaterialschaltstrecke mit Farbversorgungssystem
- 12: erstes Ventilmittel
- 14: Einlass des ersten Ventilmittels
- 16: Auslass des ersten Ventilmittels
- 18: zweites Ventilmittel
- 20: Einlass des zweiten Ventilmittels
- 22: Auslass des zweiten Ventilmittels
- 24: hohlzylindrisches Zwischenstück
- 25: unter Druck stehende Lackmaterialversorgung
- 26: unter Druck setzbarer Sammelkanal
- 28: Mittel zur Erfassung des Schlauchdrucks
- 30: Auswertevorrichtung
- 32: erste Steuerleitung
- 34: zweite Steuerleitung
- 36: Kommunikationsleitung
- 38: Pulsluftversorgungsleitung
- 40: erstes weiteres Ventilmittel
- 42: Lösemittelversorgungsleitung
- 44: zweites weiteres Ventilmittel
- 46: drittes weiteres Ventilmittel
- 48: Zerstäuber für Lackmaterial
- 50: schematischer Ablaufplan
- 52: zeitlicher Druckverlauf
- 54: Drift
- 56: Schaltzeitpunkt des ersten Ventilmittels
- 58: Schaltzeitpunkt des zweiten Ventilmittels
- 60: zeitlicher Verlauf des Schaltzustandes des ersten Ventilmittels
- 62: zeitlicher Verlauf des Schaltzustandes des zweiten Ventilmittels
- 64: Druckdifferenz
- 70: exemplarische Lackmaterialschaltstrecke
- 72: erstes Ventilmittel
- 74: zweites Ventilmittel
- 76: hohlzylindrisches Zwischenstück
- 78: unter Druck setzbarer Sammelkanal
- 80: Mittel zur Erfassung des Schlauchdrucks
- 82: Auswertevorrichtung

## Patentansprüche

1. Lackmaterialschaltstrecke (70), umfassend
• ein erstes (12, 72) und ein zweites (18, 74) Ventilmittel mit jeweils einem Einlass (14, 20) und einem Auslass (16, 22),
• ein zwischen Auslass (16) des ersten (12, 72) und Einlass (20) des zweiten (18, 74) Ventilmittels angeordnetes hohlzylindrisches Zwischenstück (24, 76),
• wobei der Einlass des ersten Ventilmittels (12, 72) dafür vorgesehen ist, an eine ständig unter Druck stehende Lackmaterialversorgung (25) angeschlossen zu sein,
• einen wahlweise unter Druck setzbaren Sammelkanal (26, 78), in welchen der Auslass (22) des zweiten Ventilmittels (18, 74) mündet,
**gekennzeichnet durch**
• Mittel (28, 80) zur Erfassung des im hohlzylindrischen Zwischenstücks (24, 76) herrschenden Drucks,
• eine Auswertevorrichtung (30, 82) zur Leckageermittlung wenigstens eines der beiden Ventilmittel (12, 18, 72, 74) anhand des zeitlichen Verlaufes (52) des erfassten Drucks bei einer zu Beginn der Leckageermittlung gegebenen Druckdifferenz (64) zwischen Ein- (14, 20) und Auslass (16, 22) des jeweiligen Ventilmittels (12, 18, 72, 74).

2. Lackmaterialschaltstrecke nach Anspruch 1, **dadurch gekennzeichnet, dass** beide Ventilmittel (12, 18, 72, 74) dafür vorgesehen sind, während der Leckageermittlung geschlossen zu sein.

3. Lackmaterialschaltstrecke nach einem der Ansprüche 1 oder 2, **dadurch gekennzeichnet, dass** die Ventilmittel (12, 18, 72, 74) durch die Auswertevorrichtung (30, 82) schaltbar (32, 34) sind.

4. Lackmaterialschaltstrecke nach einem der vorherigen Ansprüche, **dadurch gekennzeichnet, dass** weitere Ventilmittel (40, 44, 46) vorhanden sind, durch welche der Sammelkanal (26, 78) wahlweise unter Druck setzbar ist, welche durch die Auswertevorrichtung (30, 82) schaltbar sind.

5. Farbwechsler, umfassend mehrere Lackmaterialschaltstrecken nach einem der Ansprüche 1 bis 4, welche in einen gemeinsamen Sammelkanal (26, 78) münden.

6. Farbwechsler nach Anspruch 5, **dadurch gekennzeichnet, dass** eine gemeinsame Auswertevorrichtung (30, 82) zur Leckageermittlung vorgesehen ist.

7. Farbwechsler nach einem der Ansprüche 5 oder 6, **dadurch gekennzeichnet, dass** der gemeinsame Sammelkanal (26, 78) dafür vorgesehen ist, mit einem Zerstäuber (48) für Lackmaterial verbunden zu werden.

8. Farbwechsler nach einem der Ansprüche 5 bis 7, **dadurch gekennzeichnet, dass** Mittel (42, 44) vorgesehen sind, diesen mit einem Lösemittel zu spülen.

9. Verfahren zur Leckageermittlung eines Ventilmittels einer Lackmaterialschaltstrecke nach einem der Ansprüche 1 bis 4, **dadurch gekennzeichnet**, durch folgende Schritte:
• bedarfsweises Schließen des zu prüfenden ersten Ventilmittels (12, 72),
• Herstellung einer Druckdifferenz (64) zwischen Ein- (14) und Auslass (16) des zu prüfenden ersten geschlossenen Ventilmittels (12, 72) bei geöffnetem zweitem Ventilmittel (18, 74),
• Schließen des zweiten Ventilmittels (18, 74),
• Ermittlung des zeitlichen Druckverlaufs (52) in der abgeriegelten Schlauchstrecke (24, 76),
• bei driftendem (54) Druckverlauf (52) Detektion des zu prüfenden ersten Ventilmittels (12, 72) als fehlerhaft.

10. Verfahren zur Leckageermittlung nach Anspruch 9, **dadurch gekennzeichnet, dass** beim zweiten Ventilmittel (18, 74) analog zum ersten Ventilmittel (12, 72) vor gegangen wird.

## Claims

1. Paint material switching path (70), comprising
• a first (12, 72) and a second (18, 74) valve means each having an inlet (14, 20) and an outlet (16, 22),
• a hollow cylindrical intermediate piece (24, 76) arranged between the outlet (16) of the first (12, 72) and the inlet (20) of the second (18, 74) valve means,
• wherein the inlet of the first valve means (12, 72) is designed to be connected to a continuously pressurised paint material supply (25),
• a manifold channel (26, 78) which can optionally be pressurised and into which the outlet (22) of the second valve means (18, 74) opens out,
**characterized by**
• means (28, 80) for measuring the pressure prevailing in the hollow cylindrical intermediate piece (24, 76),
• an evaluation device (30, 82) for detecting leaks in at least one of the two valve means (12, 18, 72, 74) based on the characteristic (52) of the measured pressure with respect to time for a given pressure difference (64) between inlet (14, 20) and outlet (16, 22) of the respective valve means (12, 18, 72, 74) at the beginning of the leak detection.

2. Paint material switching path according to Claim 1, **characterized in that** both valves means (12, 18, 72, 74) are designed to be closed during a leak detection.

3. Paint material switching path according to one of Claims 1 or 2, **characterized in that** the valve means (12, 18, 72, 74) can be switched (32, 34) by the evaluation device (30, 82).

4. Paint material switching path according to one of the preceding claims, **characterized in that** further valve means (40, 44, 46) are provided, by means of which the manifold channel (26, 78) can optionally be pressurised and which can be switched by the evaluation device (30, 82).

5. Colour changer comprising a plurality of paint material switching paths according to one of Claims 1 to 4 which open out into a common manifold channel (26, 78).

6. Colour changer according to Claim 5, **characterized in that** a common evaluation device (30, 82) is provided for detecting leaks.

7. Colour changer according to one of Claims 5 or 6, **characterized in that** the common manifold channel (26, 78) is designed for being connected to an atomiser (48) for paint material.

8. Colour changer according to one of Claims 5 to 7, **characterized in that** means (42, 44) are provided for purging this with a solvent.

9. Method for detecting a leak in a valve means of a paint material switching path according to one of Claims 1 to 4, **characterized by** the following steps:
• closing the first valve means (12, 72) to be checked as required,
• producing a pressure difference (64) between inlet (14) and outlet (16) of the first closed valve means (12, 72) to be checked when the second valve means (18, 74) is open,
• closing the second valve means (18, 74),
• determining the pressure characteristic (52) with respect to time in the sealed hose path (24, 76),
• detection of the first valve means (12, 72) to be checked as faulty in the event of a drifting (54) pressure characteristic (52).

10. Method for detecting a leak according to Claim 9, **characterized in that** the procedure for the second valve means (18, 74) is similar to that for the first valve means (12, 72).

## Revendications

1. Voie de couplage d'alimentation de peinture (70), comprenant :
- un premier (12, 72) et un deuxième (18, 74) moyen de soupape ayant chacun une entrée (14, 20) et une sortie (16, 22),
- une pièce intermédiaire cylindrique creuse (24, 76) disposée entre la sortie (16) du premier moyen de soupape (12, 72) et l'entrée (20) du deuxième moyen de soupape (18, 74),
- l'entrée du premier moyen de soupape (12 72) étant prévue pour être raccordée à une alimentation de peinture (25) constamment sous pression,
- un canal de collecte (26, 78) pouvant être mis sous pression de manière sélective, dans lequel débouche la sortie (22) du deuxième moyen de soupape (18, 74),
**caractérisée par**
- des moyens (28, 80) pour détecter la pression régnant dans la pièce intermédiaire cylindrique creuse (24, 76),
- un dispositif d'analyse (30, 82) pour déterminer une fuite d'au moins l'un des deux moyens de soupape (12, 18, 72, 74) à l'aide de la courbe en fonction du temps (52) de la pression détectée dans le cas d'une différence de pression (64) donnée au début de la détermination de fuite entre l'entrée (14, 20) et la sortie (16, 22) du moyen de soupape respectif (12, 18, 72, 74).

2. Voie de couplage d'alimentation de peinture selon la revendication 1, **caractérisée en ce que** les deux moyens de soupape (12, 18, 72, 74) sont prévus pour être fermés pendant la détermination de fuite.

3. Voie de couplage d'alimentation de peinture selon l'une quelconque des revendications 1 ou 2, **caractérisée en ce que** les moyens de soupape (12, 18, 72, 74) peuvent être commutés (32, 34) par le dispositif d'analyse (30, 82).

4. Voie de couplage d'alimentation de peinture selon l'une quelconque des revendications précédentes, **caractérisée en ce que** d'autres moyens de soupape (40, 44, 46) sont prévus, par le biais desquels le canal de collecte (26, 78) peut être mis sous pression de manière sélective, lesquels peuvent être commutés par le dispositif d'analyse (30, 82).

5. Changeur de teinte, comprenant plusieurs voies de couplage d'alimentation de peinture selon l'une quelconque des revendications 1 à 4, qui débouchent dans un canal de collecte commun (26, 78).

6. Changeur de teinte selon la revendication 5, **caractérisé en ce qu'**un dispositif d'analyse commun (30, 82) est prévu pour déterminer une fuite.

7. Changeur de teinte selon l'une quelconque des revendications 5 ou 6, **caractérisé en ce que** le canal de collecte commun (26, 78) est prévu pour être connecté à un pulvérisateur (48) pour de la peinture.

8. Changeur de teinte selon l'une quelconque des revendications 5 à 7, **caractérisé en ce que** des moyens (42, 44) sont prévus pour rincer celui-ci avec un solvant.

9. Procédé de détermination de fuite d'un moyen de soupape d'une voie de couplage d'alimentation de peinture selon l'une quelconque des revendications 1 à 4, **caractérisé par** les étapes suivantes :
- fermeture au besoin du premier moyen de soupape à contrôler (12, 72),
- établissement d'une différence de pression (64) entre l'entrée (14) et la sortie (16) du premier moyen de soupape fermé à contrôler (12, 72) lorsque le deuxième moyen de soupape (18, 74) est ouvert,
- fermeture du deuxième moyen de soupape (18, 74),
- détermination de la courbe de pression en fonction du temps (52) dans la voie tubulaire isolée (24, 76),
- en cas d'une courbe de pression (52) décalée (54), détection du premier moyen de soupape à contrôler (12, 72) comme étant défectueux.

10. Procédé de détermination de fuite selon la revendication 9, **caractérisé en ce que** l'on procède avec le deuxième moyen de soupape (18, 74) comme avec le premier moyen de soupape (12, 72).
